(19) Europäisches Patentamt
European Patent Office
Office européen des brevets

(11) EP 0 389 999 B1

(12) **EUROPEAN PATENT SPECIFICATION**

(45) Date of publication and mention
of the grant of the patent:
**20.01.1999 Bulletin 1999/03**

(51) Int Cl.⁶: **G06F 17/30**

(21) Application number: **90105620.0**

(22) Date of filing: **24.03.1990**

(54) **Apparatus and method for digital data management**

Vorrichtung und Verfahren zur Verwaltung von digitalen Daten

Appareil et méthode de gestion de données numériques

(84) Designated Contracting States:
**DE FR GB NL**

(30) Priority: **28.03.1989 JP 77561/89**
**13.10.1989 JP 266485/89**

(43) Date of publication of application:
**03.10.1990 Bulletin 1990/40**

(73) Proprietor: **MATSUSHITA ELECTRIC INDUSTRIAL CO., LTD.**
**Kadoma-shi, Osaka-fu, 571 (JP)**

(72) Inventors:
• **Endo, Koichiro**
**Osaka-shi, Osaka-fu (JP)**
• **Mori, Yoshihiro**
**Hirakata-shi, Osaka-fu (JP)**
• **Suzuki, Kisoko**
**Neyagawa-shi, Osaka-fu (JP)**
• **Kitagawa, Hidemasa**
**Toyonaka-shi, Osaka-fu (JP)**
• **Tomimoto, Tetsuo**
**Ibaraki-shi, Osaka-fu (JP)**

(74) Representative: **Eisenführ, Speiser & Partner**
**Martinistrasse 24**
**28195 Bremen (DE)**

(56) References cited:
**EP-A- 0 165 382**

• **IBM TECHNICAL DISCLOSURE BULLETIN. vol. 21, no. 9, February 1979, NEW YORK US pages 3798 - 3800 GIBBARD, WALKER 'Efficient Storage Space Utilization'**

## Description

## BACKGROUND OF THE INVENTION

The present invention generally relates to a data management apparatus and a data management method for managing a large amount of information such as pictures, audio and other information so as to effect an editing operation.

In recent years, the information processing system is used even in the processing of the digital audio data, in the processing of the digital moving picture data, and so on, with a high demand that the mass data should be managed as the file on the computer to edit them at a high speed.

Especially the important thing in this case is an apparatus and a method for data management for managing the data in a processable form at a high speed, and these developments are strongly desired.

The conventional embodiment of the above described data management apparatus and the data management method will be described hereinafter with reference to the drawings.

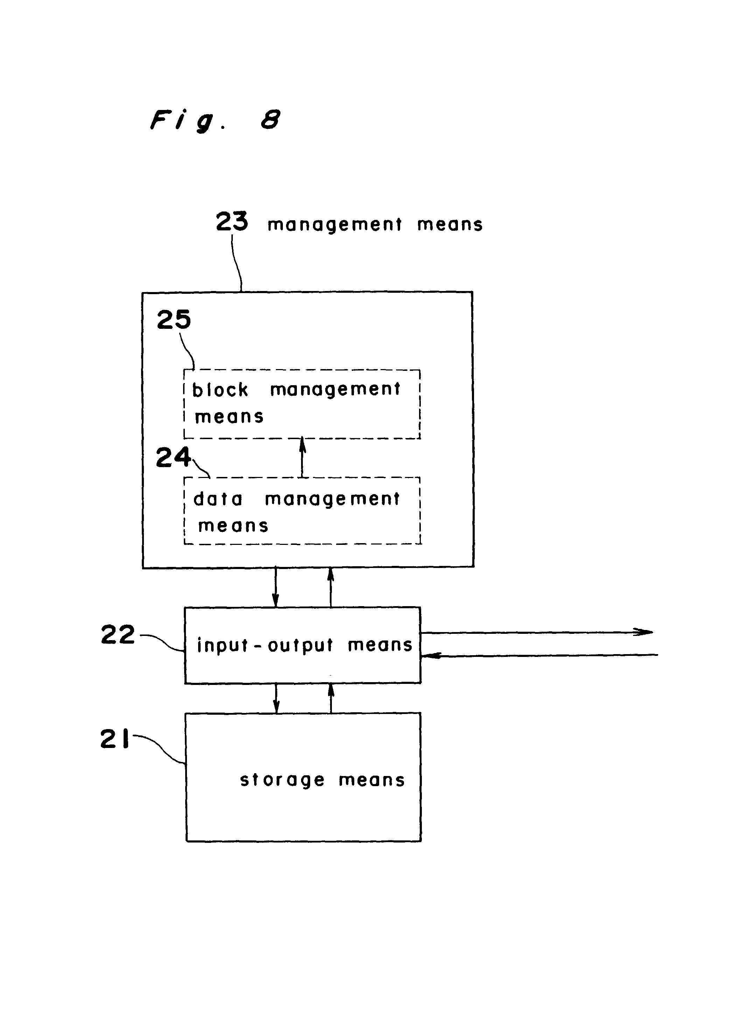

Fig. 8 is a conceptual diagram of the construction of the conventional data management apparatus for illustrating the conventional digital data management apparatus and the digital data management method.

Referring to Fig. 8, reference numeral 21 is a memory means for storing the data, reference numeral 22 is an input-output means for inputting, outputting the data into the memory means 21, reference numeral 23 is a management means for managing the data on the memory means 21 through the input-output means 22. Reference numeral 24 within the management means 23 is a data management means for dividing the areas on the storage means 21 into a plurality of blocks of the constant size to manage them, reference numeral 25 is a block management means for managing a plurality of blocks as one file.

The operation of the conventional data management apparatus constructed hereinabove and the conventional data management method will be described hereinafter.

The data management means 24 within the management means 23 manages the continued areas on the storage means 21 as the block. The block management means 25 obtains the information about the storage location and so on on the storage means 21 of the respective blocks from the data management means 24, and manages the logical concatenation information and so on so that one file may be configured with a plurality of blocks of one or more.

When the access operation is effected into one file to output it, the management means 23, first, refers to the block concatenation information for each of the files the block management means 25 is managing. Then, the location information on the storage means 21 of the respective blocks is obtained from the data management means 24 to drive the input-output means 22 so as to have the sequential access into the respective blocks on the storage means 21, so that the data of each block configuring the file from the storage means 21 may be sequentially outputted.

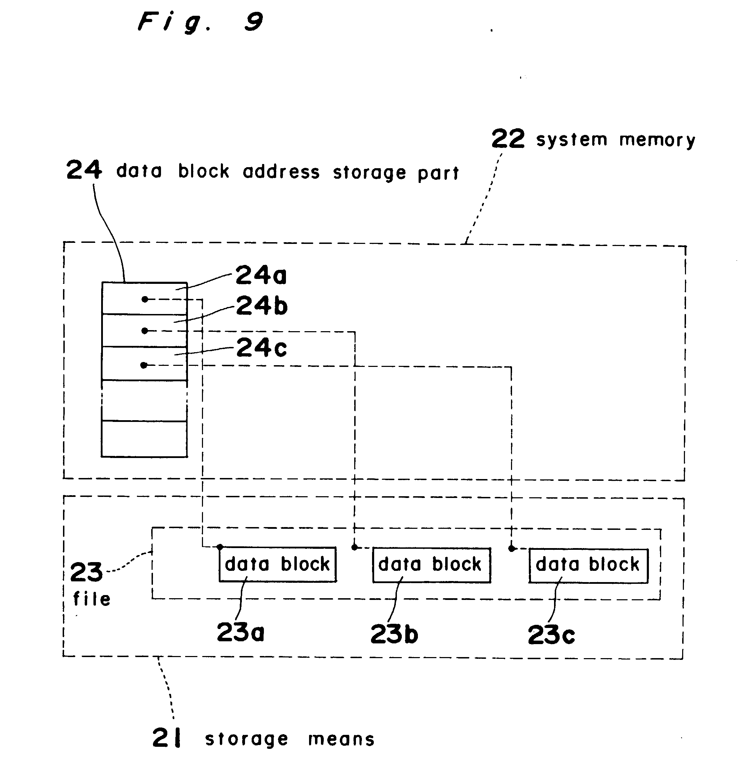

Fig. 9 is a diagram showing the relationship between the management information for the data management the management means 23 has and the data of the storage means 21. The operation of the management means 23 will be described with reference to it.

In Fig. 9, reference numeral 21 is a storage means for storing the data, reference numeral 22 is a system memory for storing the information for effecting the data management, reference numeral 23 shows one file in the storage means 21, with one file 23 being composed of the data blocks of 23a, 23b and 23c. Reference numeral 24 is a data block address storage part, which is on the system memory 22 so as to store the address on the storage means 21 of the data blocks 23a, 23b, 23c configuring the file 23. The block management means 25 obtains the address as the storage location information of the data blocks 23a through 23c from the data management means 24 and respectively stores them on the elements 24a, 24b, 24c composing the data block address storage part 24.

The management means 23 reads respectively from the composing elements 24a, 24b, 24c of the data block address storage part the address in the storage means 23 of the data blocks 23a, 23b, 23c configuring the file 23 from the data block address storage part 24 on the system memory 22. The management means 23 may manage the file 23 through the accessing of the memory means 21 in accordance with the read address information, the number information and the sequential information thereof.

The editing of the file will be described hereinafter by way of an example of the deletion of the data block from the file. When the data block 23b is deleted from the file 23, the management means 23 deletes the element 24b with the address of the data block 23b being stored on it from the data block address storage part 24 so as to write the address of the data block 23 to be stored in the 24c onto the element 24b of the data block address storage part 24. The data block 23b is to be deleted from the file 23 by the above described steps.

But in such a method as described hereinabove, all has to be rewritten in the worst case after the editing was caused about the elements 24a, 24b, 24c constituting the data block address storage part 24 in the editing operation of the file. When the number of the data blocks constituting the file 23 increases, grave bad influences are applied upon the processing speed of the system, with a problem that the demand of editing the mass file cannot be satisfied at a high speed.

From the IBM TECHNICAL DISCLOSURE BULLETIN, vol. 21, no. 9, February 1979, New York, US, pages 3798 - 3800, GIBBARD, WALKER: "Efficient Storage Space Utilization" a method of managing data is disclosed which dynamically allocates storing space by managing the data in storage pools, which in turn are divided into numbered storage sub-pools, each of which consists of a number of consecutive storage blocks. A storage allocation control subpool is used to record the availability of storage blocks within the storage sub-pools. Storage subpools are divided into allocation units containing a fixed number of consecutive storage blocks. Storage is allocated in extents of consecutive allocation units within a single storage subpool.

From EP-A3-0 165 382 a data processing system and a related method of operation is known according to which storage locations of data blocks are managed on non-eraseable storage media.

## SUMMARY OF THE INVENTION

Accordingly, an essential object of the present invention is to provide an apparatus and a method for digital data management, which is adapted to manage on the computer the mass of data required to be processed without interruption at the input and output operations so as to easily process them at a high speed.

In accomplishing this and other objects, the data management apparatus for reducing the number of data blocks in a data file to enhance real-time sequential data input-output operations according to the present invention comprises:

storage means for storing data;
input-output means, operatively coupled to said storage means, for inputting and outputting data stored in said storage means; and
management means, operatively coupled to said input-output means, for managing data stored in said storage means,

whereby,
said management means includes:

(a) data management means for managing each of a plurality of logically adjacent storage areas of said storage means respectively constituting a plurality of data blocks and for identifying within each data block at least one data area having data stored therein and any empty areas not having data stored therein;
(b) block management means for managing at least one data block as a data file based on concatenation information of the data blocks; and
(c) regulation means for

(c1) receiving concatenation information of data blocks of a data file from the data management means and the block management means, and information regarding the data size of data areas within said data block of the data file and the data size of said data block of the data file; and
(c2) driving said input-output means to move data areas of one data block of the data file to another data block of the data file so as to reduce a number of data blocks of the data file;

(d) whereby, if the data size of the data areas of the received data block is less than a predetermined value, said regulation means receives concatenation information of adjacent data blocks of the data file, so as to maintain at least a predetermined constant data size of the combined data areas of each data block of the data file, the predetermined constant data size being determined based on performance characteristics of said storage means and a data input-output speed of said input-output means to effect real-time sequential data input-output operations.

In accordance with the above described construction, the present invention has the data management means manage the continued areas on the memory means as the blocks, and further, divides the block interior into the data storage area and the free area to manage them. The block management means receives the information of the storage location and so on of the block on the storage means from the data management means, and manages the concatenation information and so on so as to configure one file from one block or more. Further, the regulation means investigates the size of the data storage area of the optional block from the data management means. If the size of the data memory area of the block is smaller than the predetermined value, the information such as storage location information and so on the memory means of the contiguous blocks to configure the file from the block management means, and also, receives the information about the size of the data storage areas and the free area of these contiguous blocks from the data management means. Thereafter, the regulation means drives the input-output means so as to move onto the block one portion or all of the data from the contiguous blocks of one or more, so that the size of the data storage area within the block may be normally regulated into the predetermined constant value or more which is determined by the performance of the storage means and the input-output speed of the data in the input-output means, and is sufficient to effect the real-time continuous data inputting, outputting operations in the input-output means.

This fact makes it possible to provide an apparatus and a method for digital data management which are adapted to manage on the computer as the file the mass data to be demanded to be processed without interruption at the input-output operation so as to effect the processing operation on them at a high speed and with ease.

As described hereinabove, an apparatus and a method for digital data management of the present invention, which makes it possible to input, output the data without interruption at the input-output operation time by the management, into a constant value of the proper size, of the data storage area within the block by the regulation means.

Also, since the existence of the free area is allowed within the block the data management means manages, the increase and decrease of the data to be caused by the editing of the file may be easily absorbed simply by the change in one portion of the file, thus making it possible to process even the mass data at the high speed without any requirement of the regular data rearrangement.

Accordingly, by this fact, an apparatus and a method for digital data management may be provided, which are adapted to manage on the computer as the file the mass data to be demanded to be processed without interruption at the input-output operation time, and capable of easily processing them at the high speed.

BRIEF DESCRIPTION OF THE DRAWINGS

These and other objects and features of the present invention will become apparent from the following description taken in conjunction with the preferred embodiment thereof with reference to the accompanying drawings, in which;

Fig. 1 is a construction conceptual diagram for illustrating an apparatus and a method for digital data management in one embodiment of the present invention;

Fig. 2 is a diagram showing the relationship between the management information the management means has and the information stored in the storage means;

Fig. 3 is a conceptual diagram for illustrating the file editing method of the present invention;

Fig. 4 is a conceptual diagram for illustrating the blocks one embodiment manages;

Fig. 5 is a conceptual diagram for illustrating the blocks another embodiment manages;

Fig. 6 is a flow chart showing one example of the operation flow of the regulation means in the present invention;

Fig. 7 is a flow chart showing another example of the operation flow of the regulation means of the present invention;

Fig. 8 is a construction conceptual diagram for illustrating the conventional apparatus and method for digital data management; and

Fig. 9 is also a diagram showing the relationship between the management information the management means has and the information stored in the storage means.

DETAILED DESCRIPTION OF THE INVENTION

Before the description of the present invention proceeds, it is to be noted that like parts are designated by like reference numerals throughout the accompanying drawings.

An apparatus and a method for digital data management in one embodiment of the present invention will be described hereinafter with reference to the drawings.

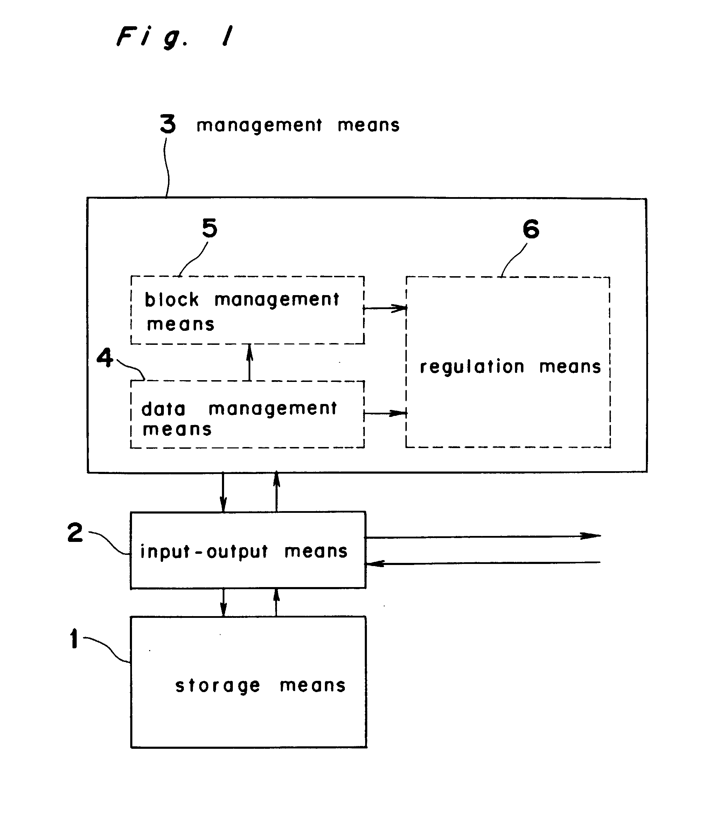

Fig. 1 is a conceptual diagram showing the construction of the data management apparatus in one embodiment of the present invention.

In Fig. 1, reference numeral 1 is a storage means for storing the data, reference numeral 2 is an input-output means for inputting, outputting the data with respect to the storage means 1, reference numeral 3 is a management means for managing the data on the storage means 1 through the input-output means 2. Reference numeral 4 in the management means 3 is a data management means for managing the data on the storage means 1 as a plurality of blocks of a constant size, reference numeral 5 is a block management means for managing a plurality of blocks as one file, reference numeral 6 is a regulation means which is adapted to receive the information from the data management means 4 and the block management means 5, and to move the input-output means 2 so as to move the data of the logically contiguous blocks.

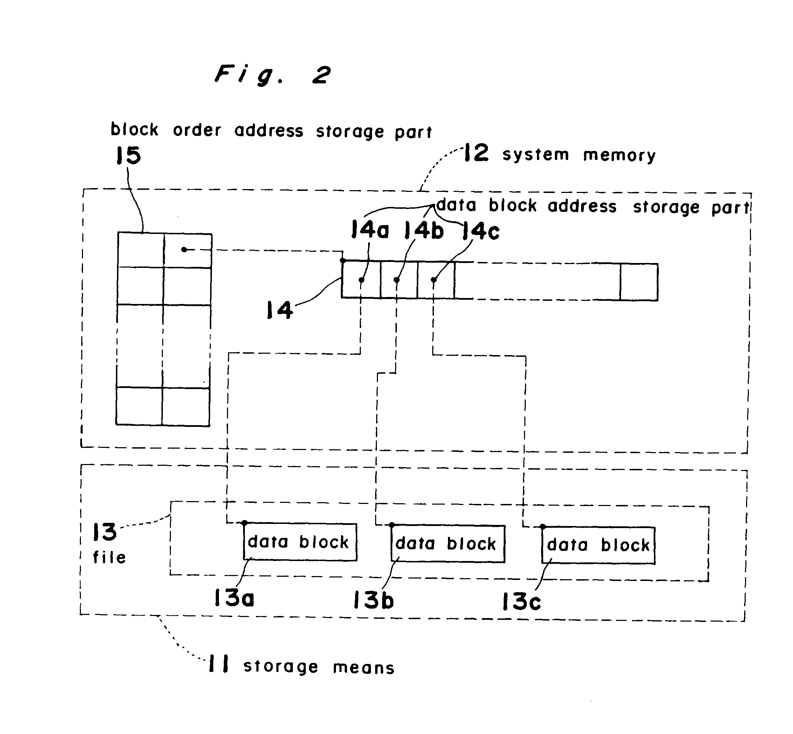

Fig. 2 is a diagram showing the relationship between the management information the management means 3 has and the information stored in the storage means 1.

In Fig. 2, reference numeral 11 is a storage means for storing the data as the file, reference numeral 12 is a system memory for storing the information, where the management means 3 manages the data as the file, reference numeral 13 shows one file in the storage means 11 with the file 13 being composed of the data blocks of 13a, 13b and 13c. Reference numeral 14 is a block order storage part located on the system memory 12, in which part the block management means 5 stores the order on the storage means 11 of the data blocks 13a, 13b, 13c configuring the file 13, reference numerals 14a, 14b, 14c are data block address storage parts in which the data management means 4 stores the addresses on the storage means 11 of the data blocks 13a, 13b, 13c, reference numeral 15 is a block order address storage part in which the block management means 5 stores the addresses on the memory 12 of the block order storage part 14 and the number of the data block order address storage part constituting the block order storage part 14.

In accordance with the construction as described hereinabove, first, a method of managing the data as the file in the block unit to be managed by the data management means 4.

First, the management means 3 reads the addresses in the system memory 12 of the block order storage part 14 and the number of the data block address storage parts constituting the block order storage part 14 from the block order address storage part 15 through the block management means 5. Then, the block order storage part 14 is accessed in accordance with the address of the read block order storage part 14 so as to read the addresses of the data blocks 13a, 13b, 13c in the storage means 11 from the data block address storage parts 14a, 14b, 14c within the block order storage part 14. The order of the data block configuring the file 13 is equal to the order of the data block address storage parts 14a, 14b, 14c stored in the block order storage part 14.

In this manner, the system may know the addresses on the storage means 11 of the data blocks 13a, 13b, 13c configuring the file 13 and the order of the data block constituting the file 13, and may manage the file 13 on the storage means 11.

A method of editing the block unit of the digital data of the present invention will be described hereinafter with reference to the drawings.

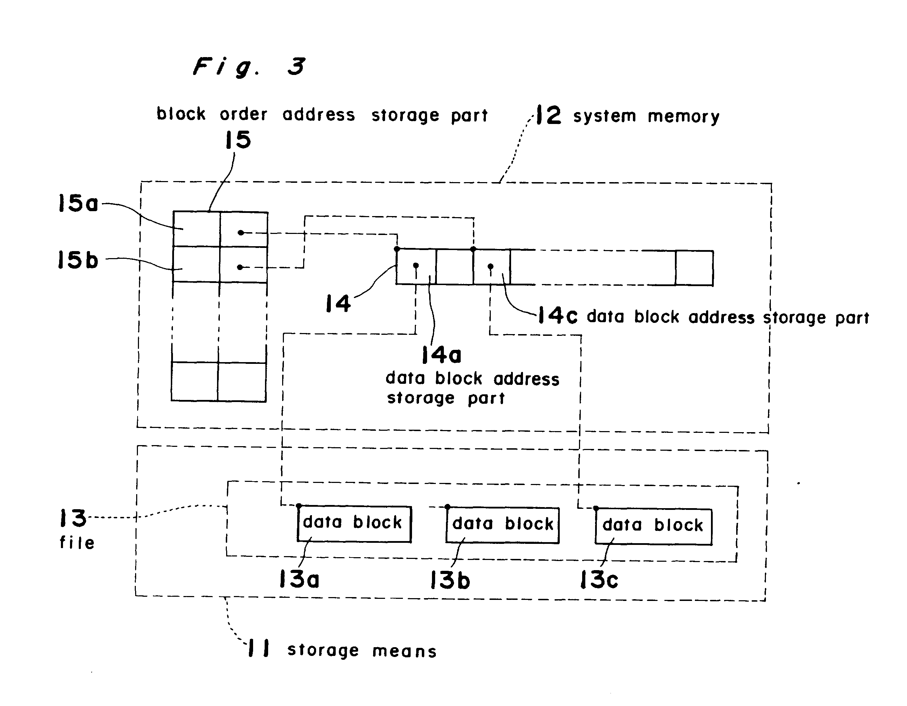

Fig. 3 shows a conceptual diagram after the deleting and editing operations have been effected so as to illustrate a method of editing the digital data as the file.

In Fig. 3, reference numerals 11 through 15 are equal to those of Fig. 2. Reference numeral 15a is a first element of the block order address storage part 15, reference numeral 15b is a second element of the block order address storage part 15, reference numeral 15c is a third element of the block order address storage part 15.

The explanation will be effected by way of an example, where the data block 13b is deleted from the file 13.

In order to delete the data block 13b from the file 13, first, the number of the data block address storage parts in the block order storage part 14 stored in the first element 15a of the block order address storage part 15 is changed into one from three. Then, the address on the memory 12 of the data block address storage part 14 with the address of the data block 13c being stored in it is stored in the second element 15b of the block order storage part 15, and also, the number of the data block address storage parts is stored as one. The deleting edition is completed.

The accessing operation into the file with the editing being completed in this manner is performed as follows. First, the management means 3 reads the first address in the system memory 12 of the block order storage part 14 and the number of the first data block address storage parts constituting the block order storage part 14 from the first element 15a of the block order address storage part 15 through the block management means 5. Also, the management means 3 reads the second address in the system memory 12 of the block order memory part 14 and the number of the second data block address storage part constituting the block order storage part 14 from the second element 15b of the block order address storage part 15 through the block management means 5.

Then, in accordance with the first address of the read block order storage part 14, the block order storage part 14 is accessed through the block management means 5, and reads the address of the data block 13a in the storage means 11 from the data block address storage part 14a within the block order storage part 14. Further, in accordance with the second address of the read block order storage part 14, the block order storage part 14 is accessed through the block management means 5, and reads the address of the data block 13c in the storage means 11 from the data block address storage part 14c within the block order storage part 14. The order of the data block configuring the file 13 is equal to the order of the data block address storage part to be read from the block order address storage part 15 and the block order storage part 14.

In this manner, the management means 3 may know the address on the storage means 11 of the data blocks 13a, 13c configuring the file 13, and the order of the data block configuring the file 13, and may manage the file 13 after the deleting, editing operations have been effected on the storage means 11.

A method of managing the data by much smaller unit than the block unit to be managed by the data management means 4 will be described hereinafter.

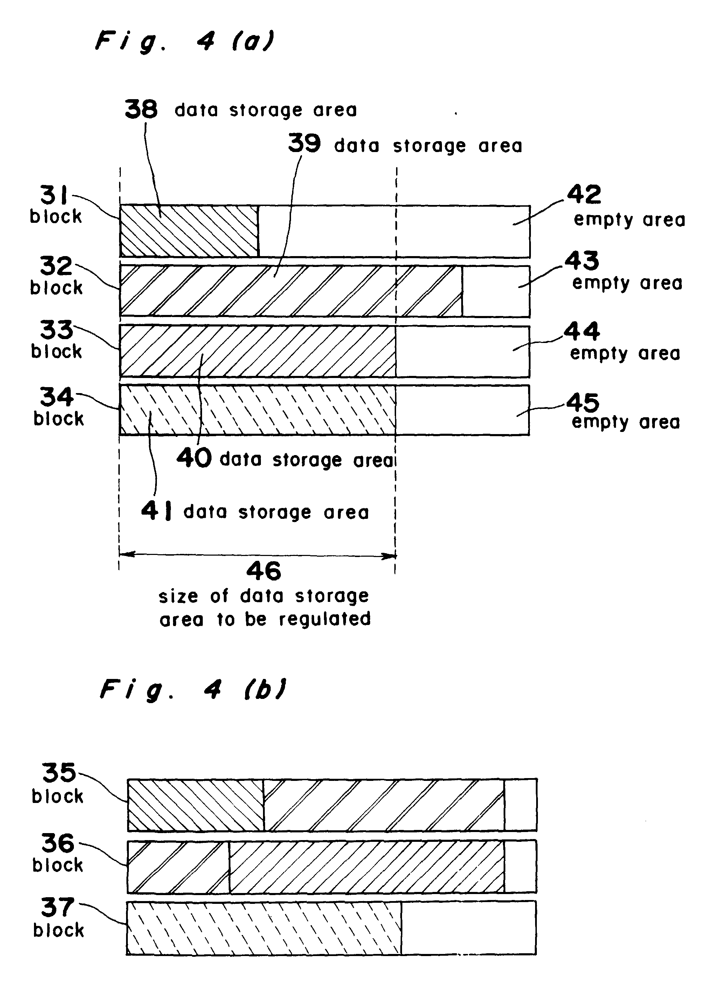

Fig. 4 shows a conceptual diagram of a plurality of blocks configuring one portion of the file on the storage means 1 of Fig. 1.

In Fig. 4, reference numerals 31 through 34 and reference numerals 35 through 37 respectively show discrete blocks arranged on the storage means 1. They are logically contiguous so as to configure one portion of the file. The block is divided in the interior thereof into a plurality of areas, the portions colored as in reference numeral 38 through reference numeral 41 show the data storage areas with the data being stored therein, the portions shown with the blank as in reference numeral 42 through reference numeral 45 show the empty areas with the data being not stored therein. Reference numeral 46 shows the size of the data storage area, in which the regulation means 6 effects the regulating operation into the constant value.

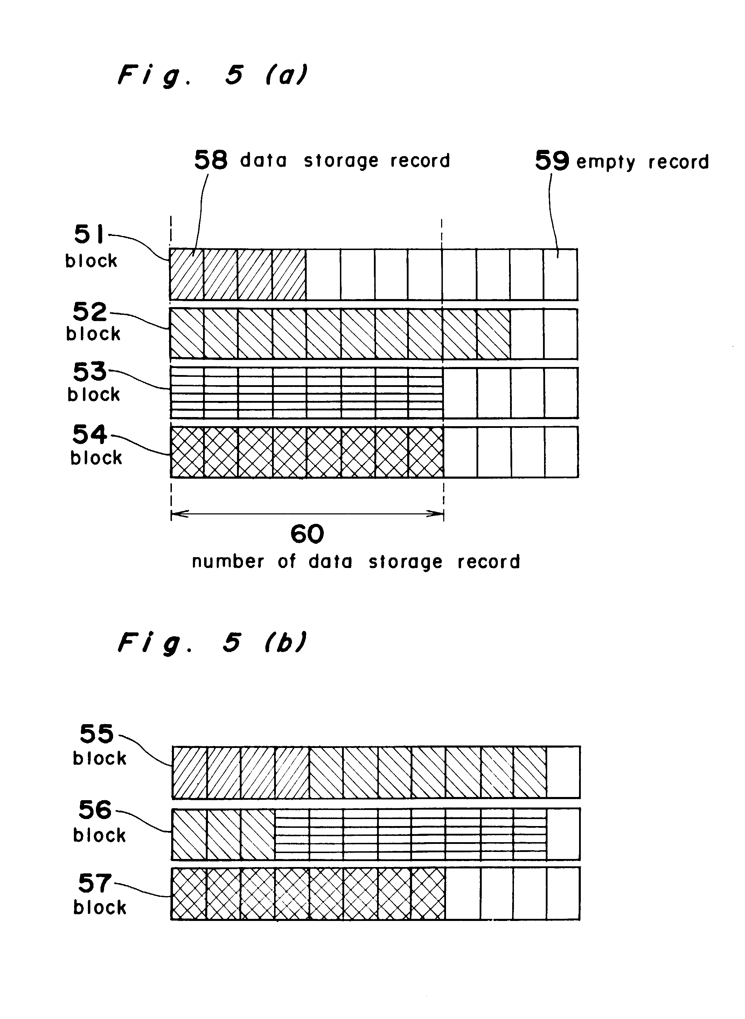

Fig. 5 shows another conceptual diagram of a plurality of blocks configuring one portion of the file on the storage means 1 of Fig. 1.

In Fig. 5, reference numerals 51 through 54 and reference numerals 55 through 57 are blocks each being arranged discretely on the storage means 1, and contiguous logically to constitute one portion of the file. The interior of the block is divided into a plurality of records. The record colored as in the reference numeral 58 means the data storage record with the record being stored therein, and the record shown blank as in the reference numeral 59 means the empty record. Reference numeral 60 shows the number of the data storage record in which the regulation means 6 effects the regulating operation into the constant value.

The operation of the data management apparatus of the present invention and the method for data management will be described in accordance with Fig. 1 and Fig. 4.

The data management means 4 within the management means 3 manages the continued areas on the storage means 1 as the block, with one portion of them being conceptually shown as in the block 31 through the block 37.

The data management means 4 further divides the interior of the block logically into the data storage area and the free area to manage them. The block 31 shows an example where the block interior is divided into a data storage area 38 with the data being stored therein and a free area 42 with the data being not stored therein. In this diagram, although the data storage area starts from the head of the block, it may start from the halfway of the block. Also, the data storage area and the free area may exist by plurality within the block.

Also, the size of the free area may be zero.

The block management means 5 obtains the information of the position and so on on the storage means 1 of the respective block from the data management means 4, and manages the logical concatenation information and so on so as to configure one file from a plurality of blocks of one or more.

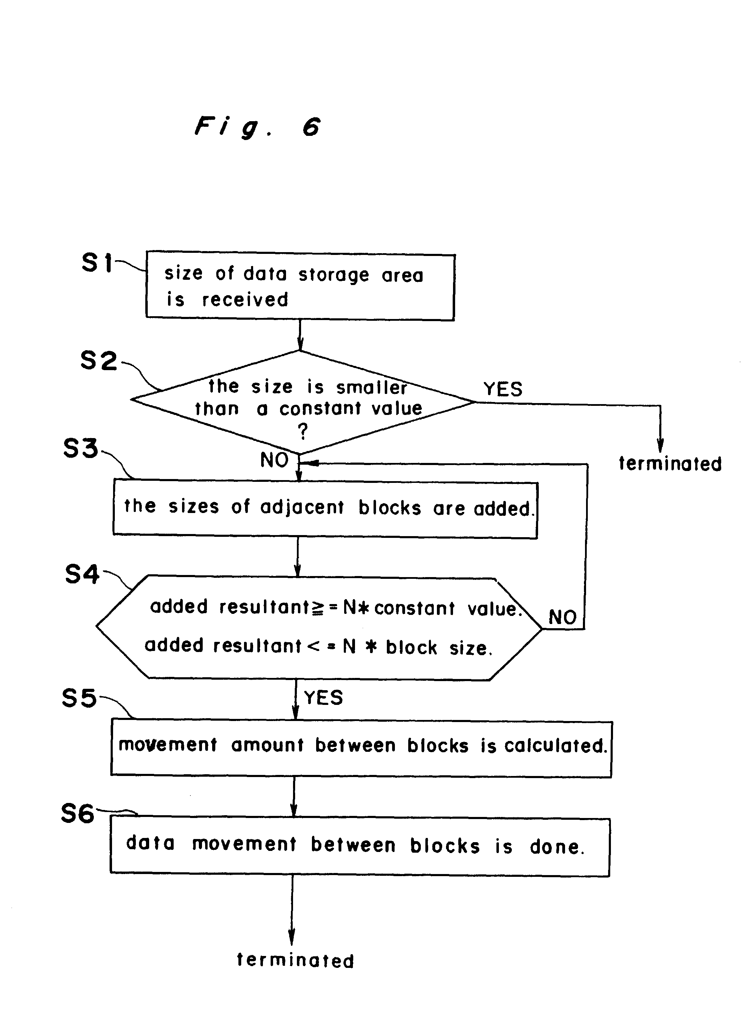

Fig. 6 shows one example of the operation flow of the regulation means 6. It will be described hereinafter with reference to Fig. 6.

The regulation means 6 receives the information about the size of the data storage area of the optional block from the data management means 4 (Step S1). If the size of the data management area of the block is smaller than the constant value (Step S2), the information of the contiguous block configuring the file is obtained from the block management mean 5, and the information about the size of the data storage area and the free area of the contiguous blocks from the data management means 4. Thereafter, the regulation means 6 drives the input-output means 2 so that one portion or all the portions of the data may be moved into the block from the contiguous blocks of one or more so as to normally regulate the size of the data storage area within the block into a constant value or more.

Now, assume that the size of the block is 16 k byte and the constant value of the size of the data storage area within the block the regulation means 6 tries to regulate is set into 12 k byte. Fig. 4 (a) shows a condition where a block with the size of the data storage area being less than the constant value has been caused by the change in the file. The size of the data storage area of the block 31 is 4 k byte, the size of the data storage area of the block 32 is 14 k byte, the size of the data storage area of the block 33 is 12 k byte, the size of the data storage area of the block 34 is 12 k byte. Since the data storage area of the block 31 is 4 k byte and is less than the established constant value, the regulation means 6 obtains the information about the block after the logically contiguous block 32 from the data management means

4 and the block management means 5. The regulation means 6 adds the size of the data storage area of the contiguous block, and sequentially examines the contiguous blocks until the conditions where the addition results become larger than the multiple of the established constant value and is smaller than the multiple of the block size. In the example shown in Fig. 4, the addition results of the size of the data storage area when the examination is effected as fast as the block 33 satisfy the conditions of becoming $4 k + 14 k + 12 k = 30 k$, becoming larger than $12 k \times 2 = 24 k$, and becoming smaller than $16 k \times 2 + 32 k$. The regulation means 6 moves the data of the 11 k byte from the block 32 to the block 31 so as to constitute the block 35. Also, the data of the 12 k byte is moved from the block 33 to the block 32 to constitute the block 36. The changing is not required after the block 34. In this manner, the regulation means 6 changes a plurality of blocks shown in Fig. 4 (a) as in Fig. 4 (b) so as to effect the regulation so that the size of the data storage area within the block may become the constant value or more.

In accordance with Fig. 1 and Fig. 5, the operation of the apparatus for digital data management and a method for digital data management in another embodiment of the present invention will be described.

The data management means 4 within the management means 3 manages the continued areas on the storage means 1 as the block, with one portion thereof being shown conceptually as shown in the blocks 51 through 57.

The data management means 4 further divides the block interior into the data storage record of one or more and into the empty record of zero or more so as to manage them. What is colored as in the record 58 is the record with the data being stored in it. The blank record as in the record 59 is the empty record with the data being not stored in it.

Although the record of the fixed length is shown as imagined in the drawing, the record may be made even into the variable length. Also, the data storage record may be start from the halfway of the block, and may not be continued within the block.

The block management means 5 obtains the information of the position and so on on the storage means 1 of each block from the data management means 4 so as to manage the logical concatenation information and so on so that one file may be configured from a plurality of blocks of one or more.

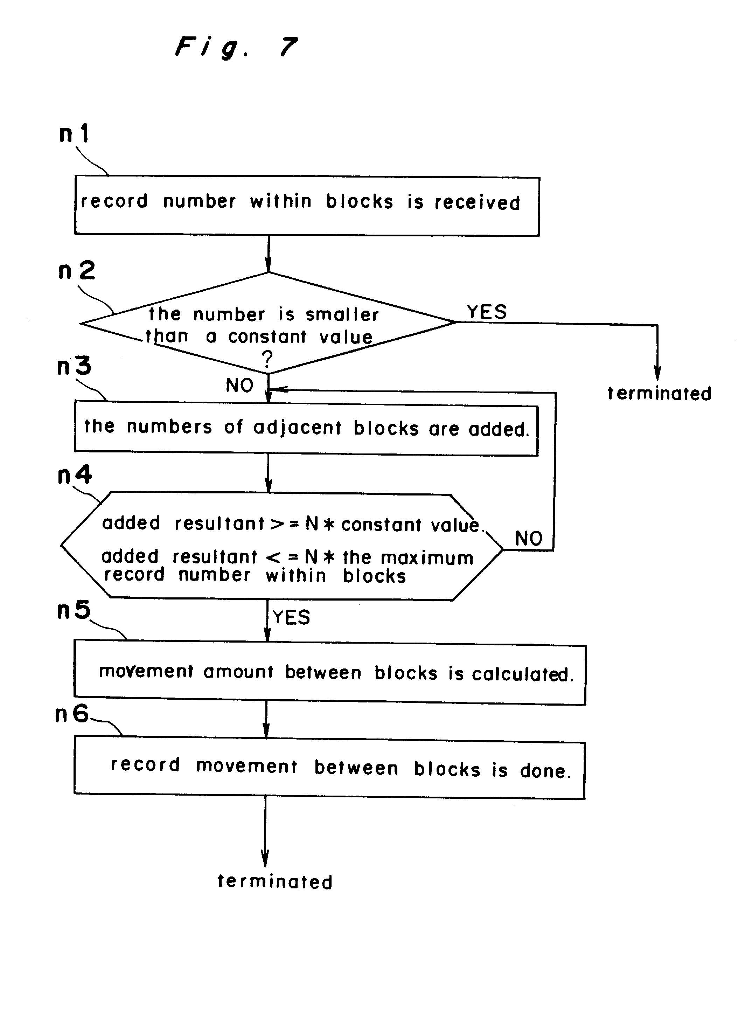

Fig. 7 shows another example of the operation flow of the regulation means 6. It will be described hereinafter with reference to Fig. 7.

The regulation means 6 receives the information about the number of the data storage records of the optional block from the data management means 4 (Step n). If the number of the data storage records of the block is smaller than the constant value, the information of the contiguous blocks configuring the file may be obtained from the block management means 5 and the information about the number of the data storage records and the empty records of the contiguous blocks from the data management means 4. Thereafter, the regulation means 6 moves the input-output means 2 so as to move the record into the block from the contiguous block of one or more so that the number of the data storage records within the block is normally regulated into the constant value or more.

Now, assume that the record number within the block is 12, and the number of the data storage records within the block the regulation means 6 tries to regulate is set into eight records. Fig. 4 (a) shows a condition where the block with the number of the data storage records being less than the constant value has been caused by the change in the file. The number of the data storage records of the block 31 is 4, the number of the data storage records of the block 32 is 10, the number of the data storage records of the block 31 is 8, the number of the data storage records of the block 31 is 8.

The number of the data storage records of the block 31 is 4 and is less than the predetermined constant value 8, the regulation means 6 obtains the information about the block after the logically contiguous block 32 is obtained from the data management means 4 and the block management means 5. The regulation means 6 sequentially examines the contiguous blocks until the conditions are satisfied where the number of the data storage records of the contiguous blocks are added, the addition results are larger than the multiple of the determined constant value, and are smaller than the multiple of the block size. In the example, when the examination is effected as far as the block 33, the addition results of the number of the data storage records become $4 + 10 + 8 = 22$ so as to satisfy the conditions of becoming larger than $8 \times 2 = 16$, and becoming smaller than $12 \times 2 = 24$. The regulation means 6 moves the data of the seven records from the block 32 to the block 31 to constitute the block 35. Also, the eight records are moved from the block 33 into the block 32 to constitute the block 36. The changing is not effected after the block 34. In this manner, the regulation means 6 changes a plurality of blocks shown in Fig. 4 (a) as in Fig. 4 (b) so as to effect the regulating operation for the number of the data storage records within the block to become the constant value or more.

When the block interior has been divided into a plurality of fixed length record, the data movement unit between the blocks is limited into the record, but the information the data management means 4 manages will become less.

A secondary storage apparatus, which is generally used, such as magnetic disk, optical disk or the like will be used for the storage means 1, 11. Although these apparatuses require the seek at the access into each block, the data amount within the block is managed at the constant value of the proper size by the regulation means 6 as in the apparatus and the method for digital data management, the proper size, for example, a buffer of two block portions is provided on the input-output means 2 so that the data may be inputted, outputted without interruption at the input-output operations.

Although the size of the data storage area within the block to be regulated by the regulation means 6 and the number of the data storage records, namely, the data amount within the block may be optionally set, it may be determined by the specification of the performance of the storage means 1, 11, the necessary data output speed and so on as in the equation (1),

$$Lb = Vo \cdot Vr \cdot Ta / (Vr - Vo) \qquad (1)$$

wherein Lb is a size (byte) of the data storage area, Vo is a data output speed, Vr is a disk transfer speed (byte/second), Ta is a disk access time (second).

When a standard magnetic disk having 52 ms in disk access time, and 960 K byte in disk transfer speed, is to be used for the storage means 1, 11, and 170 K byte/second is required in the continuous output speed of the data from the input-output means 2, the size of the data storage area will suffice if it is 11 K byte or more.

In the present embodiment, although the data of one block is supposed to be inputted, outputted at one access into the storage means 1, 11, two blocks or more may be inputted, outputted.

Also, in the apparatus and the method for digital data management of the present invention, as the existence of the free area is allowed within the block the data management means 4 manages, the increase and the decrease of the data to be caused by the edition of the file may be easily absorbed simply by the change in the one portion of the file, and the data is not required to be periodically arranged.

The size of the data storage area of the block which is less than the constant value in the data storage area is assumed to be Eo, the size of the data storage area of the blocks continuous logically to the block are E1, E2, ... Ej, with the addition of them being represented with Sj. Assume that the constant value to be regulated by the regulation means 6 is Rmin, the block size is Rmax, and the size of the data storage area within all the blocks has only to be Rmin or more and to be Rmax or less. If the minimum j which satisfies the equation (2) is obtained, the number j + 1 of the blocks necessary for the regulation of the block which is less than the constant value Rmin in the size of the data storage area may be obtained.

$$N \times Rmin \leq Sj \leq N \times Rmax \qquad (2)$$

In the equation (2), N is an integer of 1 or more. Since $0 < Rmin < Rmax$, and $0 \leq SO < Rmin$, it is possible to prove the equation (3) from the equation (2).

$$j \leq Rmax / (Rmax - Rmin) \qquad (3)$$

As the j which may be obtained from the size Rmin of the data storage area and the block size Rmax shows a finite part from the equation (3), the regulation means 6 may retain the size of the data storage area of all the blocks at the constant value or more by the movement of the data from the block of the finite part.

Since the seek time into the next block does not have to be taken into consideration about the final block configuring the file, the size of the data storage area may be the constant value or lower.

Also, the size of the data storage area to be regulated by the regulation means and the number of the data storage records may be different for each file. In this case the block management means 5 retains these information.

**Claims**

1. A data management apparatus for reducing the number of data blocks in a data file to enhance real-time sequential data input-output operations, comprising:

   storage means (1) for storing data;
   input-output means (2), operatively coupled to said storage means (1), for inputting and outputting data stored in said storage means (1); and
   management means (3), operatively coupled to said input-output means (2), for managing data stored in said storage means (1),

   characterized in that,
   said management means (3) includes:

   (a) data management means (4) for managing each of a plurality of logically adjacent storage areas of said storage means (1) respectively constituting a plurality of data blocks (13a, 13b, 13c) and for identifying within each data block (13a, 13b, 13c) at least one data area having data stored therein and any empty areas not having data stored therein;
   (b) block management means (5) for managing at least one data block (13a, 13b, 13c) as a data file (13) based on concatenation information of the data blocks (13a, 13b, 13c); and
   (c) regulation means (6) for

   (c1) receiving concatenation information of data blocks (13a, 13b, 13c) of a data file (13) from the data management means (4) and the block management means (5), and information regarding the data size of data areas within said data block of the data file (13) and the data size of said data block of the data file (13); and
   (c2) driving said input-output means (2) to move data areas of one data block (13a, 13b, 13c) of the data file (13) to another data block (13a, 13b, 13c) of the data file (13) so as to reduce a number of data blocks (13a, 13b, 13c) of the data file;

   (d) whereby, if the data size of the data areas of the received data block is less than a predetermined value, said regulation means (6) receives concatenation information of adjacent data blocks of the data file, so as to maintain at least a predetermined constant data size of the combined data areas of each data block (13a, 13b, 13c) of the data file (13), the predetermined constant data size being determined based on performance characteristics of said storage means (1) and a data input-output speed of said input-output means (2) to effect real-time sequential data input-output operations.

2. A data management apparatus as defined in claim 1,

   wherein said predetermined constant data size varies for each data file (13) managed by said block management means (5).

3. A data management apparatus as defined in claim 1 or 2,

   wherein said data management means (4) manages each of a plurality of logically adjacent storage areas of said storage means (1) respectively constituting a plurality of data blocks (13a, 13b, 13c), and identifies within each data block (13a, 13b, 13c) at least one data record having data stored therein and any empty records not having data stored therein.

4. A data management apparatus as defined in claim 1,

   wherein said input-output means (2) inputs or outputs data of at least one data block (13a, 13b, 13c) upon each access operation.

5. In a data management apparatus comprising

   storage means (1) for storing data;
   input-output means (2), operatively coupled to said storage means (1), for inputting and outputting data stored in said storage means (1); and

management means (3), operatively coupled to said input-output means (2), for managing data stored in said storage means (1),

a data management method for reducing the number of data blocks in a data file to enhance real-time sequential data input-output operations, characterized by the steps of:

(a) managing, using data management means (4), each of a plurality of logically adjacent storage areas of a storage means (1) respectively constituting a plurality of data blocks (13a, 13b, 13c) and identifying within each data block (13a, 13b, 13c) at least one data area having data stored therein and any empty areas not having data stored therein;

(b) managing, using block management means (5), at least one data block (13a, 13b, 13c) as a data file (13) based on concatenation information of the data blocks (13a, 13b, 13c);

(c1) receiving, using regulation means (6), concatenation information of data blocks (13a, 13b, 13c) of a data file (13) from the data management means (4) and the block management means (5), and information regarding the data size of data areas within said data block of the data file (13) and the data size of said data block of the data file (13); and

(c2) driving, using the regulation means (6), said input-output means (2) to move data areas of one data block (13a, 13b, 13c) of the data file (13) to another data block (13a, 13b, 13c) of the data file (13), so as to reduce a number of data blocks (13a, 13b, 13c) of the data file; and

(d) if the data size of the data areas of the received data block is less than a predetermined value, receiving, using the regulation means (6), concatenation information of adjacent data blocks of the data file, so as to maintain at least a predetermined constant data size of the combined data areas of each data block (13a, 13b, 13c) of the data file (13), the predetermined constant data size being determined based on performance characteristics of said storage means (1) and a data input-output speed of said input-output means (2) to effect real-time sequential data input-output operations.

6. A data management method as defined in claim 5,

comprising the step of managing, using the data management means (4), each of a plurality of logically adjacent storage areas of the storage means (1) respectively constituting a plurality of data blocks (13a, 13b, 13c), and identifying within each data block (13a, 13b, 13c) at least one data record having data stored therein and any empty records not having data stored therein.

7. A data management method as defined in claim 5, comprising the steps of:

storing data management means (4), addresses of the data block (13a, 13b, 13c) in plural respective data block address storage parts (14a, 14b, 14c) of a block order storage part (14);

managing, using block management means (5), at least one data blocks (13a, 13b, 13c) as a data file (13) based on concatenation information of the at least one data block (13a, 13b, 13c) according to addresses stored in the block order storage part (14a, 14b, 14c), and storing address information of the block order storage part (14a, 14b, 14c) containing the data block address storage parts and a number of the data block address storage parts of the block order storage part in a block order address storage part (15); and

reading, using management means (3), the address information of the block order storage part (14) containing the data block address storage parts and the number of the data block address storage parts of the block order storage part stored in the block order address storage part (15), accessing the block order storage part in accordance with the thus read information to obtain an address of a data block of the storage means (1), and accessing data in the storage means (1) via an input-output means (2) in accordance with the thus read address of the data block (13a, 13b, 13c).

8. A data management method as defined in claim 5 or 7, comprising the steps of:

editing, using management means (3), one of said data blocks (13a, 13b, 13c) of the storage means (1) by rewriting an address of the data block address storage parts (14a, 14b, 14c) of the block order storage part (14) corresponding to said one data block to by stored in the block order storage part (14) and the number of data block address storage parts of the block order storage part stored in the block order address storage part (15).

**Patentansprüche**

1. Datenverwaltungsvorrichtung zum Reduzieren der Anzahl von Datenblöcken in einer Datendatei, um sequentielle Echtzeit-Daten-Eingabe-Ausgabe-Operationen zu verbessern, mit:

Speichermitteln (1) zum Speichern von Daten; Eingabe-Ausgabe-Mitteln (2), welche mit den Speichermitteln (1) operativ gekoppelt sind, zum Eingeben und Ausgeben von in den Speichermitteln (1) gespeicherten Daten; und Verwaltungsmitteln (3), die operativ mit den Eingabe-Ausgabe-Mitteln (2) gekoppelt sind, zum Verwalten von in den Speichermitteln (1) gespeicherten Daten,

dadurch gekennzeichnet, daß
die Verwaltungsmittel (3) einschließen:

(a) Datenverwaltungsmittel (4) zum Verwalten jedes einer Vielzahl von logisch benachbarten Speicherbereichen der Speichermittel (1), die jeweils eine Vielzahl von Datenblöcken (13a, 13b, 13c) bilden, und zum Identifizieren innerhalb jedes Datenblocks (13a, 13b, 13c) mindestens eines Datenbereichs, welcher gespeicherte Daten aufweist, und jeglicher leeren Bereiche, die keine gespeicherten Daten aufweisen;
(b) Blockverwaltungsmittel (5) zum Verwalten mindestens eines Datenblocks (13a, 13b, 13c) als eine Datendatei (13), basierend auf Verkettungsinformation der Datenblöcke (13a, 13b, 13c); und
(c) Regelungsmittel (6) zum

(c1) Empfangen von Verkettungsinformation von Datenblöcken (13a, 13b, 13c) einer Datendatei (13) von den Datenverwaltungsmitteln (4) und den Blockverwaltungsmitteln (5), und von Information, die die Datengröße von Datenbereichen innerhalb des Datenblocks der Datendatei (13) und die Datengröße des Datenblocks der Datendatei (13) betrifft; und
(c2) Antreiben der Eingabe-Ausgabe-Mittel (2) zum Bewegen der Datenbereiche eines Datenblocks (13a, 13b, 13c) einer Datendatei (13) zu einem anderen Datenblock (13a, 13b, 13c) der Datendatei (13), um so eine Anzahl von Datenblocks (13a, 13b, 13c) der Datendatei zu reduzieren;

(d) wobei, wenn die Datengröße der Datenbereiche des empfangenen Datenblocks kleiner ist als ein vorbestimmter Wert, die Regulierungsmittel (6) Verkettungsinformation von benachbarten Datenblöcken der Datendatei empfangen, um so mindestens eine vorbestimmte, konstante Datengröße der kombinierten Datenbereiche jedes Datenblocks (13a, 13b, 13c) der Datendatei (13) zu erhalten, wobei die vorbestimmte, konstante Datengröße basierend auf Leistungscharakteristika der Speichermittel (1) und einer Daten-Eingabe-Ausgabe-Geschwindigkeit der Eingabe-Ausgabe-Mittel (2) bestimmt wird, um sequentielle Echtzeit-Daten-Eingabe-Ausgabe-Operationen zu bewirken.

2. Datenverwaltungsvorrichtung nach Anspruch 1,

wobei die vorbestimmte, konstante Datengröße für jede Datendatei (13), die durch die Blockverwaltungsmittel (5) verwaltet wird, variiert.

3. Datenverwaltungsvorrichtung nach Anspruch 1 oder 2,

wobei die Datenverwaltungsmittel (4) jeden einer Vielzahl von logisch benachbarten Speicherbereichen der Speichermittel (1), die jeweils eine Vielzahl von Datenblöcken (13a, 13b, 13c) bilden, verwalten, und innerhalb jedes Datenblocks (13a, 13b, 13c) mindestens eine Datenaufzeichnung identifizieren, die Daten gespeichert hat, und alle leeren Aufzeichnungen, die keine Daten gespeichert haben.

4. Datenverwaltungsvorrichtung nach Anspruch 1,

wobei die Eingabe-Ausgabe-Mittel (2) bei jeder Zugriffsoperation Daten von mindestens einem Datenblock (13a, 13b, 13c) eingeben oder ausgeben.

5. In einer Datenverwaltungsvorrichtung mit:

Speichermitteln (1) zum Speichern von Daten; Eingabe-Ausgabe-Mitteln (2), die operativ mit den Speichermitteln (1) gekoppelt sind, zum Eingeben und Ausgeben von in den Speichermitteln (1) gespeicherten Daten; und Verwaltungsmitteln (3), die operativ mit den Eingabe-Ausgabe-Mitteln (2) gekoppelt sind, zum Verwalten von in den Speichermitteln (1) gespeicherten Daten,
ein Datenverwaltungsverfahren zum Reduzieren der Anzahl von Datenblöcken in einer Datendatei, um sequentielle Echtzeit-Daten-Eingabe-Ausgabe-Operationen zu verstärken,

gekennzeichnet durch die Schritte:

(a) unter Verwendung von Datenverwaltungsmitteln (4) wird jeder einer Vielzahl von logisch benachbarten Speicherbereichen eines Speichermittels (4), jeweils eine Vielzahl von Datenblöcken (13a, 13b, 13c) bildend, verwaltet, und innerhalb jedes Datenblocks (13a, 13b, 13c) wird mindestens ein Datenbereich identifiziert, welcher dort gespeicherte Daten aufweist, und alle leeren Bereiche, die in sich keine gespeicherten Daten aufweisen;

(b) unter Verwendung von Blockverwaltungsmitteln (5) wird mindestens ein Datenblock (13a, 13b, 13c) als eine Datendatei (13) verwaltet, basierend auf Verkettungsinformation der Datenblöcke (13a, 13b, 13c);

(c1) unter Verwendung von Regulierungsmitteln (6) wird Verkettungsinformation der Datenblöcke (13a, 13b, 13c) einer Datendatei (13) von den Datenverwaltungsmitteln (4) und den Blockverwaltungsmitteln (5), und Information bezüglich der Datengröße der Datenbereiche innerhalb des Datenblocks der Datendatei (13) und der Datengröße des Datenblocks der Datendatei (13) empfangen; und

(c2) unter Verwendung der Regulierungsmittel (6) werden die Eingabe-Ausgabe-Mittel (2) angetrieben, um Datenbereiche eines Datenblocks (13a, 13b, 13c) der Datendatei (13) zu einem anderen Datenblock (13a, 13b, 13c) der Datendatei (13) zu verschieben, um so eine Anzahl von Datenblöcken (13a, 13b, 13c) der Datendatei zu reduzieren; und

(d) wenn die Datengröße der Datenbereiche des empfangenen Datenblocks kleiner ist als ein vorbestimmter Wert, wird unter Verwendung der Regulierungsmittel (6) Verkettungsinformation benachbarter Datenblöcke der Datendatei empfangen, um so mindestens eine vorbestimmte, konstante Datengröße der kombinierten Daten bereich jedes Datenblocks (13a, 13b, 13c) der Datendatei (13) aufrechtzuerhalten, wobei die vorbestimmte, konstante Datengröße basierend auf Leistungscharakteristika der Speichermittel (1) und einer Daten-Eingabe-Ausgabe-Geschwindigkeit der Eingabe-Ausgabe-Mittel (2) bestimmt wird, um sequentielle Echtzeit-Daten-Eingabe-Ausgabe-Operationen zu bewirken.

**6.** Datenverwaltungsverfahren nach Anspruch 5,

den Schritt enthaltend: unter Verwendung der Datenverwaltungsmittel (4) wird jeder einer Vielzahl von logisch benachbarten Speicherbereichen der Speichermittel (1), jeweils eine Vielzahl von Datenblöcken (13a, 13b, 13c) bildend, verwaltet, und innerhalb eines Datenblocks (13a, 13b, 13c) wird mindestens eine Datenaufzeichnung mit gespeicherten Daten, und werden alle leeren Aufzeichnungen, die keine gespeicherten Daten aufweisen, identifiziert.

**7.** Datenverwaltungsverfahren nach Anspruch 5, mit den Schritten:

Datenverwaltungsmittel (4), Adressen des Datenblocks (13a, 13b, 13c) werden in mehreren jeweiligen Datenblockadressenspeicherabschnitten (14a, 14b, 14c) eines Blockreihenfolgenspeicherabschnittes (14) gespeichert;

unter Verwendung von Blockverwaltungsmitteln (5) wird mindestens ein Datenblock (13a, 13b, 13c) als eine Datendatei (13) basierend auf Verkettungsinformation des mindestens einen Datenblocks (13a, 13b, 13c) gemäß den in den Blockreihenfolgenspeicherabschnitt (14a, 14b, 14c) gespeicherten Adressen verwaltet, und Adreßinformation des Blockreihenfolgenspeicherabschnittes (14a, 14b, 14c), welcher die Datenblockadressenspeicherabschnitte enthält, und eine Anzahl von Datenblockadressenspeicherabschnitten des Blockreihenfolgenspeicherabschnittes in einen Blockreihenfolgenadressenspeicherabschnitt (15) gespeichert; und

unter Verwendung von Verwaltungsmitteln (3) wird die Adreßinformation des Blockreihenfolgenspeicherabschnittes (14), welcher die Datenblockadressenspeicherabschnitte enthält, und die Anzahl der Datenblockadressenspeicherabschnitte der Blockreihenfolgenspeicherabschnitte, die in dem Blockreihenfolgenadressenspeicherabschnitt (15) gespeichert sind, gelesen, auf den Blockreihenfolgenspeicherabschnitt wird in Übereinstimmung mit der derart gelesenen Information zugegriffen, um eine Adresse eines Datenblocks der Speichermittel (1) zu erhalten, und in den Speichermitteln (1) wird über Eingabe-Ausgabe-Mittel (2) in Übereinstimmung mit der derart gelesenen Adresse des Datenblocks (13a, 13b, 13c) auf Daten zugegriffen.

**8.** Datenverwaltungsverfahren nach Anspruch 5 oder 7, mit den Schritten:

unter Verwendung der Verwaltungsmittel (3) wird eines der Datenblöcke (13a, 13b, 13c) der Speichermittel (1) durch erneutes Schreiben einer Adresse der Datenblockadressenspeicherabschnitte (14a, 14b, 14c) des Blockreihenfolgenspeicherabschnittes (14) entsprechend zu dem einen Datenblock, welcher in dem Blockreihenfolgenspeicherabschnitt (14) zu speichern ist, aufbereitet, und die Anzahl der Datenblockadressenspeicherabschnitte des in dem Blockreihenfolgenadressenspeicherabschnitt (15) gespeicherten Blockreihenfolgenspeicherabschnitt aufbereitet.

## Revendications

1. Appareil de gestion de données pour réduire le nombre de blocs de données dans un fichier de données pour accélérer les opérations d'entrée/sortie de données séquentielles en temps réel, comprenant :

   un moyen de mémorisation (1) pour memoriser les données ;
   un moyen d'entrée/sortie (2), couplé fonctionnellement audit moyen de météorisation (1), pour entrer et sortir les données mémorisées dans ledit moyen de mémorisation (1) ; et
   un moyen de gestion (3), couplé fonctionnellement audit moyen d'entrée/sortie (2) pour gérer les données mémorisées dans ledit moyen de mémorisation (1),

   caractérisé en ce que
   ledit moyen de gestion (3) comprend :

   (a) un moyen de gestion de données (4) pour gérer chaque zone d'une pluralité de zones de mémorisation logiquement adjacentes dudit moyen de mémorisation (1) constituant respectivement une pluralité de blocs de données (13a, 13b, 13c) et pour identifier à l'intérieur de chaque bloc de données (13a, 13b, 13c) au moins une zone de données ayant des données mémorisées dans celle-ci et toute zone vide n'ayant pas de données mémorisées dans celle-ci ;
   (b) un moyen de gestion de blocs (5) pour gérer au moins un bloc de données (13a, 13b, 13c) comme fichier de données (13) basé sur des informations de concaténation des blocs de données (13a, 13b, 13c) ; et
   (c) un moyen de régulation (6) pour

   (c1) recevoir les informations de concaténation des blocs de données (13a, 13b, 13c) d'un fichier de données (13) à partir du moyen de gestion de données (4) et du moyen de gestion de bloc (5) et des informations concernant la dimension des données des zones de données à l'intérieur dudit bloc de données du fichier de données (13) et la dimension des données dudit bloc de données du fichier de données (13) ; et
   (c2) attaquer ledit moyen d'entrée/sortie (2) pour déplacer les zones de données d'un bloc de données (13a, 13b, 13c) du fichier de données (13) dans un autre bloc de données (13a, 13b, 13c) du fichier de données (13) de façon à réduire le nombre de blocs de données (13a, 13b, 13c) du fichier de données ;

   (d) d'où il résulte que, si la dimension des données des zones de données du bloc de données reçues est inférieure à une valeur prédéterminée, ledit moyen de régulation (6) reçoit les informations de concaténations des blocs de données adjacents du fichier de données de façon à maintenir au moins une dimension de données constante prédéterminée des zones de données combinées de chaque bloc de données (13a, 13b, 13c) du fichier de données (13), la dimension de données constante prédéterminée étant déterminée sur la base des caractéristiques de performance dudit moyen de mémorisation (1) et de la vitesse d'entrée/sortie des données dudit moyen d'entrée/sortie (2) pour effectuer des opérations d'entrée/sortie de données séquentielles en temps réel.

2. Appareil de gestion de données selon la revendication 1, dans lequel ladite dimension de données constante prédéterminée varie pour chaque fichier de données (13) géré par ledit moyen de gestion de blocs (5).

3. Appareil de gestion de données selon la revendication 1 ou 2, dans lequel ledit moyen de gestion de données (4) gère chaque zone d'une pluralité de zones de mémorisation logiquement adjacentes dudit moyen de mémorisation (1) constituant respectivement une pluralité de blocs de données (13a, 13b, 13c) et identifie à l'intérieur de chaque bloc de données (13a, 13b, 13c) au moins un enregistrement de données ayant des données mémorisées dans celui-ci et tout enregistrement vide n'ayant pas de données mémorisées dans celui-ci.

4. Appareil de gestion de données selon la revendication 1,

   dans lequel ledit moyen d'entrée/sortie (2) entre ou sort des données d'au moins un bloc de données (13a, 13b, 13c) sur chaque opération d'accès.

5. Dans un appareil de gestion de données comprenant

un moyen de mémorisation (1) pour mémoriser les données ;

un moyen d'entrée/sortie (2) couplé fonctionnellement audit moyen de mémorisation (1), pour entrer et sortir les données mémorisées dans ledit moyen de mémorisation (1) ; et

un moyen de gestion (3), couplé fonctionnellement audit moyen d'entrée/sortie (2) pour gérer les données mémorisées dans ledit moyen de mémorisation (1),

un procédé de gestion de données pour réduire le nombre de blocs de données dans un fichier de données pour accélérer les opérations d'entrée/sortie de données séquentielles en temps réel, caractérisé par les étapes consistant à

(a) gérer, en utilisant le moyen de gestion de données (4), chaque zone d'une pluralité de zones de mémorisation logiquement adjacentes d'un moyen de mémorisation (1) constituant respectivement une pluralité de blocs de données (13a, 13b, 13c) et identifier à l'intérieur de chaque bloc de données (13a, 13b, 13c) au moins une zone de données ayant des données mémorisées dans celle-ci et toute zone vide n'ayant pas de données mémorisées dans celle-ci ;

(b) gérer, en utilisant le moyen de gestion de blocs (5), au moins un bloc de données (13a, 13b, 13c) comme un fichier de données (13) basé sur les informations de concaténation des blocs de données (13a, 13b, 13c) ;

(c1) recevoir, en utilisant le moyen de régulation (6) les informations de concaténation des blocs de données (13a, 13b, 13c) du fichier de données (13) à partir du moyen de gestion de données (4) et du moyen de gestion de bloc (5) et des informations concernant la dimension des données des zones de données à l'intérieur dudit bloc de données et du fichier de données (13) et la dimension des données dudit bloc de données du fichier de données (13) ; et (c2) attaquer, en utilisant le moyen de régulation (6), ledit moyen d'entrée/sortie (2) pour déplacer les zones de données d'un bloc de données (13a, 13b, 13c) du fichier de données (13) à un autre bloc de données (13a, 13b, 13c) du fichier de données (13) de façon à réduire le nombre de blocs de données (13a, 13b, 13c) du fichier de données ; et

(d) si la dimension des données des zones de données du bloc de données reçue est inférieure à une valeur prédéterminée, recevoir, en utilisant le moyen de régulation (6), des informations de concaténation des blocs de données adjacents du fichier de données de façon à maintenir au moins une dimension de données constante prédéterminée des zones de données combinées de chaque bloc de donnés (13a, 13b, 13c) du fichier de données (13), la dimension de données constante prédéterminée étant déterminée sur la base des caractéristiques de performance audit moyen de mémorisation (1) et de la vitesse d'entrée/sortie de données dudit moyen d'entrée/sortie (2) pour effectuer des opérations d'entrée/sortie de données séquentielles en temps réel.

**6.** Procédé de gestion de données selon la revendication 5,

comprenant l'étape consistant à gérer, en utilisant le moyen de gestion de données (4), chaque zone d'une pluralité de zones de mémorisation logiquement adjacentes du moyen de mémorisation (1) constituant respectivement une pluralité de blocs de données (13a, 13b, 13c) et identifier à l'intérieur de chaque bloc de données (13a, 13b, 13c) au moins un enregistrement de données ayant des données mémorisées dans celui-ci et tout enregistrement vide n'ayant pas de données mémorisées dans celui-ci.

**7.** Procédé de gestion de données selon la revendication 5,
comprenant les étapes consistant à :

mémoriser, en utilisant le moyen de gestion de données (4) les adresses des blocs de données (13a, 13b, 13c) dans de multiples parties de mémorisation d'adresse de blocs de données respectifs (14a, 14b, 14c) d'une partie de mémorisation d'ordre de blocs (14) ;
gérer, en utilisant le moyen gestion de bloc (5), au moins un bloc de données (13a, 13b, 13c) comme fichier de données (13) basé sur les informations de concaténation d'au moins un bloc de données (13a, 13b, 13c) en conformité avec l'adresse mémorisée dans la partie de mémorisation d'ordre de bloc (14a, 14b, 14c) et mémoriser des informations d'adresse de la partie de mémorisation d'ordre de blocs (14a, 14b, 14c) contenant les parties de mémorisation d'adresse de blocs de données et un nombre de partie de mémorisation d'adresse de blocs de données de la partie de mémorisation d'ordre de blocs dans une partie de mémorisation d'adresse d'ordre de blocs de données (15) ; et

lire, en utilisant le moyen de gestion (3), les informations d'adresse de la partie de mémorisation d'ordre de blocs (14) contenant les parties de mémorisation d'adresse de blocs de données et le nombre de partie de mémorisation d'adresses de blocs de données de la partie de mémorisation d'ordre de blocs mémorisés dans la partie de mémorisation d'adresse d'ordre de blocs de données (15), accéder à la partie de mémorisation d'ordre de blocs en conformité avec les informations ainsi lues afin d'obtenir une adresse du bloc de données du moyen de mémorisation (1) et accéder aux données dans le moyen de mémorisation (1) via un moyen d'entrée/sortie (2) en conformité avec l'adresse ainsi lue du bloc de données (13a, 13b, 13c).

8. Procédé de gestion de données selon la revendication 5 ou 7,
comprenant les étapes consistant à

éditer, en utilisant le moyen de gestion (3), un desdits blocs de données (13a, 13b, 13c) du moyen de mémorisation (1) en réécrivant une adresse des parties de mémorisation d'adresse de blocs de données (14a, 14b, 14c) de la partie de mémorisation d'ordre de blocs (14) correspondant audit bloc de données qui est mémorisé dans la partie de mémorisation d'ordre de bloc (14) et le nombre de parties de mémorisation d'adresse de blocs de données de la partie de mémorisation d'ordre de blocs mémorisée dans la partie de mémorisation d'adresse d'ordre de blocs (15).

*Fig. 1*

**3** management means

```
                    5                              6

         ┌ ─ ─ ─ ─ ─ ─ ─ ─ ┐         ┌ ─ ─ ─ ─ ─ ─ ─ ─ ─ ┐
         | block management |  ──→    |                   |
         | means            |         |                   |
   4     └ ─ ─ ─ ─ ─↑─ ─ ─ ─ ┘        | regulation means  |
         ┌ ─ ─ ─ ─ ─ ─ ─ ─ ┐         |                   |
         | data management  |  ──→    |                   |
         | means            |         └ ─ ─ ─ ─ ─ ─ ─ ─ ─ ┘
         └ ─ ─ ─ ─ ─ ─ ─ ─ ┘
```

**2**  input-output means

**1**  storage means

# Fig. 2

block order address storage part

**15**

**12** system memory

data block address storage part

**14a 14b 14c**

**14**

**13**
file

| data block | data block | data block |

**13a** **13b** **13c**

**11** storage means

## Fig. 3

block order address storage part — 12 system memory

15

15a

15b

14 — 14c data block address storage part

14a
data block address
storage part

13 ⋯ file

data block — 13a

data block — 13b

data block — 13c

11 storage means

EP 0 389 999 B1

EP 0 389 999 B1

## Fig. 4 (a)

38 data storage area

39 data storage area

31 block

42 empty area

32 block

43 empty area

33 block

44 empty area

34 block

45 empty area

40 data storage area

41 data storage area

46
size of data storage
area to be regulated

## Fig. 4 (b)

35 block

36 block

37 block

18

## Fig. 5 (a)

58 data storage record     59 empty record

51 block

52 block

53 block

54 block

60
number of data storage record

## Fig. 5 (b)

55 block

56 block

57 block

## *Fig. 6*

```
S1 ─┐  ┌─────────────────────────┐
    └──│ size of data storage area │
       │ is  received            │
       └─────────────────────────┘
                    │
                    ▼
S2 ─┐        ◇ the size is smaller        YES ──────────┐
    └────────  than  a constant value                   │
                      ?                                  │
                     NO ◄──────────────────┐            ▼
S3 ─┐  ┌─────────────────────────────────┐ │       terminated
    └──│ the sizes of adjacent blocks are added. │
       └─────────────────────────────────┘ │
                    │                       │
                    ▼                       │
S4 ─┐    added resultant≧= N*constant value.    NO ─┘
    └──  added resultant< = N * block size.
                    │
                    ▼ YES
S5 ─┐  ┌─────────────────────────────────────────┐
    └──│ movement amount between blocks is calculated. │
       └─────────────────────────────────────────┘
                    │
                    ▼
S6 ─┐  ┌─────────────────────────────────────────┐
    └──│ data  movement between blocks is  done.  │
       └─────────────────────────────────────────┘
                    │
                    ▼
              terminated
```

# Fig. 7

**n1**

| record number within blocks is received |
|---|

**n2**

the number is smaller than a constant value ? — YES → terminated

NO

**n3**

| the numbers of adjacent blocks are added. |
|---|

**n4**

added resultant $>= N *$ constant value.

added resultant $<= N *$ the maximum record number within blocks — NO

YES

**n5**

| movement amount between blocks is calculated. |
|---|

**n6**

| record movement between blocks is done. |
|---|

terminated

# Fig. 8

**23** management means

**25**

block management means

**24**

data management means

**22** input-output means

**21** storage means

*Fig. 9*

**22** system memory

**24** data block address storage part

**24a**

**24b**

**24c**

**23**
file

data block

data block

data block

**23a**

**23b**

**23c**

**21** storage means